# EUROPEAN PATENT APPLICATION

(11) **EP 1 653 209 A1**
(43) Date of publication of application: **03.05.2006**
(21) Application number: 04746882.2
(22) Date of filing: 02.07.2004
(51) Int. Cl.: G01L 9/12

(54) **QUARTZ TYPE PRESSURE SENSOR, AND PRODUCTION METHOD THEREFOR**

(30) Priority: 03.07.2003 JP 2003191066; 21.05.2004 JP 2004152063
(71) Applicant: Toyo Communication Equipment Co., Ltd., Kawasaki-Shi, Kanagawa 212-8513 (JP)
(72) Inventor: WATANABE, Jun, c/o Toyo Communicat. Equip. Co. Ltd, Kouza-gun, Kanagawa 253-0192 (JP)
(74) Representative: GROSSE BOCKHORNI SCHUMACHER
(86) International application number: PCT/JP2004/009413
(87) International publication number: WO 2005/003711

(57) **Abstract**

In a touch-mode capacitance type pressure sensor, a quartz pressure sensor that can solve difficulty in thickness control on a diaphragm due to a low etching precision which is a drawback in a pressure sensor using a detecting piece made from silicon, and deterioration in a detecting accuracy and poor repetitive reproducibility in elastic deformation due to the difficulty, respectively, is provided by utilizing quartz as a detecting piece for the pressure sensor. The quartz pressure sensor including a bottom plate made from an insulating material, a lower electrode film and a dielectric film sequentially laminated on a face of the bottom plate, a detecting piece provided at a position thereof opposed to said dielectric film with a thin portion and fixed on the face of the bottom plate, and an upper electrode film formed in at least one portion of the thin portion having a positional relationship thereof opposed to the lower electrode film, in which a fine gap airtight space is provided between a lower face of the detecting piece and the dielectric film is characterized in that the detecting piece is made from a quartz material.

## Description

### TECHNICAL FIELD

The present invention relates to an improvement in a pressure sensor, to a quartz pressure sensor with improved reliability by constituting a detecting piece with a quartz plate, conventionally made from a silicon material, and to a manufacturing method thereof.

### BACKGROUND ART

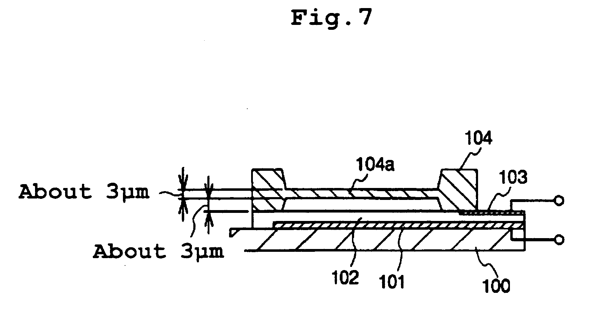

A tire pressure monitoring system that detects air pressure of each tire equipped in a vehicle such as an automobile by a pressure sensor and generates an alarm at a time of abnormality occurrence is conventionally known.
As an air pressure sensor that is provided in a rubber tire in an automobile or the like and measures an air pres sure, a technique in which a diaphragm made from ceramics and a base made from ceramics are joined to each other and a change in electrostatic capacitance in a clearance formed between the both members is converted to a pressure is disclosed in Japanese Patent Application Laid-Open No. 2001-174357. However, in an air pressure sensor using ceramics as a detecting piece, there is a problem about a detection accuracy which is desired to be improved.
As an air pressure sensor without such a drawback, attention is recently paid to a touch-mode capacitance type pressure sensor using a detecting piece made from silicon (Si), as shown in Fig. 7. The pressure sensor has an electrode film 101, a dielectric thin film 102, an electrode film 103, and a detecting piece 104 made from silicon assembled on a glass plate 100. The pressure sensor utilizes an electrostatic capacitance change occurring due to a direct contact of a thin film portion (diaphragm) 104a of the detecting piece 104 with the dielectric thin film 102 according to deformation caused by pressure for pressure detection. This type of an air pressure sensor is disclosed in, for example, IEEJ Trans. SM, Vol.123, No.1, 2003 (Transaction of The Institute of Electrical Engineers of Japan, SM, Vol.123, No.1, 2003), "Touch Mode Capacitive Pressure Sensor for Passive Tire Monitoring System".
[Patent Literature 1] Japanese Patent Application Laid-Open No. 2001-174357
[Non-Patent Literature 1] IEEJ Trans. SM, Vol.123, No.1, 2003 (Transaction of The Institute of Electrical Engineers of Japan, SM, Vol.123, No.1, 2003), "Touch Mode Capacitive Pressure Sensor for Passive Tire Monitoring System"

### DISCLOSURE OF THE INVENTION

### Problems to be Solved by the Invention

In the air pressure sensor using a detecting piece made from silicon, it is not only necessary to process the diaphragm 104a of a silicon wafer thin to such an extent that a thickness thereof becomes about 3µm utilizing etching but also it is necessary to set an extremely small gap with about 3µm between the diaphragm 104a and the dielectric thin film 102.
As described in the above publication, a procedure for forming the diaphragm 104a includes doping of boron to one face of a silicon wafer, proceeding etching by performing etching from the other face of the wafer, and stopping etching at a time of arrival at a layer doped with boron. That is, a thickness of a reformed layer formed by doping boron becomes a thickness of the diaphragm. However, the thickness of the layer doped with boron, namely, the thickness of the diaphragm 104a must be controlled, for example, by managing a doping time of boron. Therefore, even if change in doping speed of boron occurs due to fluctuation in manufacturing conditions or the like, since controlling based on such a change can not be performed, a difference between individuals becomes large. As a result, fluctuation in manufacturing air pressure sensors becomes large. Further, since a Q value of silicon material is not high, there is also a problem about repetitive reproducibility of elastic deformation. As further detailed, in a diaphragm type pressure sensor, since an electrostatic capacitance changes due to flexure of a diaphragm, thickness control with a high accuracy is inevitable when a diaphragm is worked so as to make a flexing characteristic of the diaphragm uniform in order to make a change amount of an electrostatic capacitance between individuals uniform.
In addition, in a touch-mode capacitance type pressure sensor, since a stress concentrates on a movable portion of a diaphragm coming in contact with a bottom plate, thickness control with a higher accuracy is inevitable when a diaphragm is worked not only for achieving a sensor accuracy but also for maintaining mechanical strength at a desired level.
In this point, particularly, in a touch-mode capacitance type pressure sensor using silicon, since it is impossible to measure and control accurate thickness during working, a difference in thickness between individual diaphragms becomes large. As a result, such a problem as deterioration in yield or limitation in small-sizing occurs. That is, when small-sizing of a pressure sensor is advanced, since it is necessary to maintain pressure sensitivity characteristics while reducing an area of a movable portion of a diaphragm, thinning of the movable portion of the diaphragm is required, which results in demand for a further high working precision of the diaphragm.
The present invention has been achieved in view of the above problem, and an object of the present invention is to provide a quartz pressure sensor that can solve difficulty in thickness control on a diaphragm due to a low etching accuracy which is a drawback in a pressure sensor using a detecting piece made from silicon, and deterioration in a detecting accuracy and poor repetitive reproducibility in elastic deformation due to the difficulty, respectively, by utilizing a quartz (particularly, AT cut), which has not conventionally been utilized as a material for constituting a detecting piece and which is a material whose utility is not realized by even those skilled in the art, as a detecting piece for the pressure sensor in a touch-mode capacitance type pressure sensor.

### Means to Solve the Problems

In order to solve the above problem, an invention described in claim 1 provides a pressure sensor, including a bottom plate made from an insulating material, a lower electrode film and a dielectric film sequentially laminated on a face of the bottom plate, a detecting piece provided at a position thereof opposed to the dielectric film with a thin portion and fixed on the face of the bottom plate, and an upper electrode film formed in at least one portion of the thin portion having a positional relationship thereof opposed to the lower electrode film, in which a fine gap airtight space is provided between the upper electrode film and the dielectric film, characterized in that the detecting piece is made from a quartz material.
According to the present invention, since quartz is used as the material for the detecting piece instead of silicon which is conventionally used, the following superiority is provided. That is, the quartz is material which is physically stable as compared with silicon, and has reduced secular change and high reproducibility due to mechanical deformation (hysteresis is reduced). With quartz, it is easy to strictly manage the thickness of a thin portion 10a as a diaphragm, so that diaphragms with a uniform plate thickness which do not include thickness differences among thin portions for respective individuals can be obtained.
An invention described in claim 2 provides a pressure sensor, including a bottom plate made from an insulating material, a lower electrode film laminated on a face of the bottom plate, a detecting piece provided at a position thereof opposed to the lower electrode film with a thin portion and fixed on the face of the bottom plate, and an upper electrode film formed in at least one portion of the thin portion having a positional relationship thereof opposed to the lower electrode film, in which a fine gap airtight space is provided between the upper electrode film and the lower electrode film, characterized in that the detecting piece is made from a quartz material.
The pressure sensor according to the present invention can be constituted without using a dielectric film. In this case, a thin portion of quartz constituting the detecting piece can also serve as the dielectric film and the diaphragm.
An invention described in claim 3 provides the pressure sensor according to claim 1 or 2, characterized in that the airtight space is formed by a recessed portion formed on a portion of a lower face of the detecting piece or a recess formed on a face of the insulating plate.
The airtight space is a fine gap formed between the thin portion and the bottom plate, but the airtight space can be formed by the recessed portion formed on the lower face of the detecting piece or the recess formed on the bottom plate.

An invention described in claim 4 provides a pressure sensor, comprising a lower electrode film and a dielectric film sequentially laminated on a face of a bottom plate made from an insulating material, a detecting piece constituted of a thin portion and a thick portion surrounding the thin portion, and an upper electrode film formed in at least one portion of a lower face of the thin portion in the detecting piece, in which a fine gap airtight space is formed between the thin portion and the bottom plate by fixing a lower face of the thick portion in the detecting piece to the face of the bottom plate via the upper electrode film in a close contact manner, characterized in that the detecting piece is made from a quartz material.
An invention described in claim 5 provides the pressure sensor according to claims 1 to 4, characterized in that the bottom plate is made from a quartz material.
An invention described in claim 6 provides a pressure sensor, including a dielectric film also serving as a lower electrode film and laminated on a face of a bottom plate made from a conductive material, a detecting piece constituted of a thin portion and a thick portion surrounding the thin portion, and an upper electrode film formed in at least one portion of a lower face or an upper face of the thin portion in the detecting piece, in which an airtight space defined by a fine gap is formed between the thin portion and the bottom plate by fixing a lower face of the thick portion in the detecting piece to the face of the bottom plate in a close contact manner, characterized in that the detecting piece is made from a quartz material.
The lower electrode film may be omitted by making the bottom plate from a conductor.
An invention described in claim 7 provides a pressure sensor, characterized in that the detecting piece according to any one of claims 1 to 6 is disposed such that a main face of the thin portion on its flat face side is opposed to the face of the bottom plate.
When one main face of the detecting piece is a flat face and the other main face thereof is a non-flat face, the airtight space can be easily made by opposing the flat face of the detecting piece to an upper face of the bottom plate.

An invention described in claim 8 provides the pressure sensor according to claims 1 to 7, characterized in that the detecting piece is formed with the thin portion by performing a thinning work on a quartz plate with etching.
In the thinning work on the quartz material, it is possible to finely control the thickness by etching.
An invention described in claim 9 provides the pressure sensor according to claims 1 to 8, characterized in that the detecting piece and the bottom plate are made from quartz materials of the same kind, and the detecting piece is joined to the bottom plate such that crystal axes of the detecting piece and the bottom plate coincide with each other.
It is possible to make characteristics of the detecting piece and the bottom plate to a temperature change to strictly coincide with each other by making not only the materials to be used but also the crystal axes of the detecting piece and the bottom plate to coincide with each other.
An invention described in claim 10 provides the pressure sensor according to claims 1 to 9, characterized in that the quartz pressure sensor is a touch-mode capacitance type pressure sensor.
As compared with a semiconductor material such as silicon, quartz has a remarkably high processing accuracy to thickness and allows manufacturing of the detecting piece with a desired thickness. Therefore, the quartz material provides an excellent convenience in the touch-mode capacitance type pressure sensor which requires a high precision in thickness of the thin portion.
An invention described in claim 11 provides the pressure sensor according to claims 1 to 10, characterized in that the thin portion in the detecting piece or the upper electrode film is in contact with the dielectric film or the face of the bottom plate during non-measurement.
In the touch-mode capacitance type pressure sensor, when the thin portion is spaced from the bottom plate during non-measurement, fluctuation occurs in an initial measurement state, but measurement can be made with a stable accuracy from the beginning of the measurement if the thin portion is brought in contact with the bottom plate from the beginning of measurement.
An invention described in claim 12 provides the pressure sensor according to claim 11, characterized in that the airtight space is in a vacuum state.
The vacuum state in which air is not present in the airtight space solves an adverse influence due to expansion of gas due to heat or the like.

An invention described in claim 13 provides the pressure sensor according claims 1 to 12, characterized in that the detecting piece is made from a quartz material having a cut angle which can control a resonant frequency by plate thickness adjustment.
Since the thickness can be measured accurately based on a natural oscillation frequency of the thin portion, working precision can be improved and yield can be elevated.
An invention described in claim 14 provides a pressure sensor, characterized in that the quartz material according to claim 13 is made from a quartz material having a thickness sliding oscillation mode or a thickness vertical mode.
The quartz material described in claim 14 can be exemplified by the quartz material having a thickness sliding oscillation mode or a thickness vertical mode.
An invention described in claim 15 provides the pressure sensor according to claims 1 to 14, characterized in that the detecting piece is constituted of an AT cut quartz plate.
When the AT cut quartz plate is processed by wet etching or the like, a thickness difference occurs in the movable portion, but it is convenient because the thickness of the thin portion can be controlled by performing frequency conversion.
An invention described in claim 16 provides a manufacturing method of the quartz pressure sensor according to any one of claims 13 to 15, characterized by including a step of frequency-converting the thickness of the thin portion to confirm the same.
An invention described in claim 17 provides the pressure sensor according to claims 10 to 12, characterized in that the pressure sensor is a touch-mode type pressure sensor in which a quartz plate with a cut angle where a normal line to a face of the quartz plate is approximately coincident with a quartz crystal Z-axis direction is used as the quartz plate constituting the detecting piece.

### Effects due to the Invention

According to the present invention, by utilizing quartz (particularly, AT cut) as a detecting piece in a pressure sensor in the capacitance type pressure sensor, a quartz pressure sensor that can solve difficulty in thickness control on a diaphragm which is a drawback in a pressure sensor using a detecting piece made from silicon, and deterioration in a detecting accuracy and poor repetitive reproducibility in elastic deformation due to the difficulty, respectively can be provided.
Quartz has not been conventionally utilized as a material for constituting the detecting piece in the capacitance type_ pressure sensor, and it is a material whose utility is not realized by even those skilled in the art.
According to the inventions described in claims 1, 4, and 5, since quartz is used as a material for the detecting piece instead of silicon conventionally used, the following superiority is provided. That is, quartz is a material which is physically stable as compared with silicon, and has reduced secular change and high reproducibility due to mechanical deformation (hysteresis is reduced). With quartz, it is easy to strictly manage the thickness of the thin portion 10a as a diaphragm, so that diaphragms with a uniform plate thickness which do not include thickness differences among thin portions for respective individuals can be obtained.
According to the invention described in claim 2, the pressure sensor can be constituted without using a dielectric film. In this case, the thin portion of quartz constituting the detecting piece can also serve as the dielectric film and the diaphragm.
According to the invention described in claim 3, the airtight space is a fine gap formed between the thin portion and the bottom plate, but the airtight space can be formed by the recessed portion formed on the lower face of the detecting piece or the recess formed on the bottom plate.
According to the invention described in claim 6, the lower electrode film may be omitted by making the bottom plate from a conductor.
According to the invention described in claim 7, when one main face of the detecting piece is a flat face and the other main face thereof is a non-flat face, the airtight space can be easily formed by opposing the flat face of the detecting piece to an upper face of the bottom plate.
According to the invention described in claim 8, it is possible to control a thickness finely by etching in the processing on the quartz material.
According to the invention described in claim 9, it is possible to make characteristics of the detecting piece and the bottom plate to a temperature change strictly coincide with each other by making not only the materials to be used but also the crystal axes coincide with each other.
According to the invention described in claim 10, the quartz pressure sensor is the touch-mode capacitance type pressure sensor. As compared with a semiconductor material such as silicon, quartz has a remarkably high processing accuracy to thickness and allows manufacturing of the detecting piece with a desired thickness. Therefore, quartz material provides an excellent convenience in the touch-mode capacitance type pressure sensor which requires a high precision in thickness of the thin portion.
According to the invention described in claim 11, in the touch-mode capacitance type pressure sensor, when the thin portion is spaced from the bottomplate during non-measurement, fluctuation occurs in an initial measurement state, but measurement can be made with a stable accuracy from the beginning of the measurement if the thin portion is brought in contact with the bottom plate from the beginning of measurement.

According to the invention described in claim 12, the vacuum state in which air is not present in the airtight space solves an adverse influence due to expansion of gas due to heat or the like.
According to the invention described in claim 13, since the thickness can be measured accurately based on a natural oscillation frequency of the thin portion, processing accuracy can be improved and yield can be elevated.
According to the invention described in claim 14, the quartz material having a thickness sliding oscillation mode or a thickness vertical mode can be exemplified as an example of the quartz material described in claim 7.
According to the invention described in claim 15, when the AT cut quartz plate is processed by wet etching or the like, a thickness difference occurs in the movable portion, but it is convenient because the thickness of the thin portion can be controlled by performing frequency conversion.
According to the invention described in claim 16, since the step of frequency-converting the thickness of the thin portion to confirm the same is provided, a thickness of the thin portion can be controlled with a high precision.
According to the invention described in claim 17, since the quartz plate with a cut angle where a normal line to a face of the quartz plate is approximately coincident with the quartz crystal Z-axis direction is used as the quartz plate constituting the detecting piece in the inventions described in claims 10 to 12, working becomes easy.

### Best Mode for Carrying Out the Invention

Embodiments of the present invention shown in the drawings are explained in detail below.

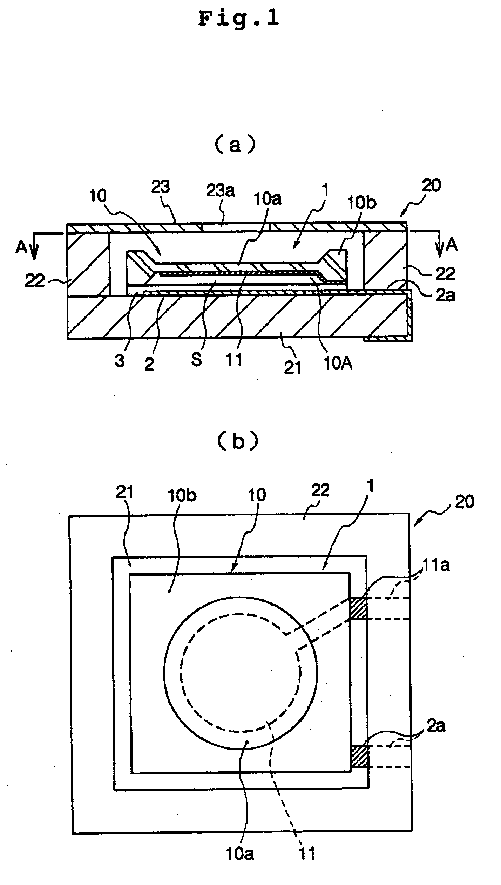

Figs. 1(a) and 1(b) are a vertical sectional view showing an entire constitution of a touch-mode capacitance type pressure sensor according to an embodiment of the present invention, and a sectional view taken along line A-A shown in Fig. 1(a).
A touch-mode capacitance pressure sensor (hereinafter, "pressure sensor" or "touch-mode type pressure sensor") 1 is accommodated in a container 20 made from an insulating material such as ceramics. The ceramic container 20 generally includes a bottom plate 21, four side walls 22 standing from peripheral edges of the bottom plate 21, and an upper lid 23 fixed to an upper opening formed by the side walls 22 and provided with a ventilation opening 23a.
Since the side walls 22 and the upper lid 23 are not essential, even a constitution where a detecting piece 10 or the like is assembled on the bottom plate 21 is sufficient in a practical use.
The pressure sensor 1 accommodated in the ceramic container 20 in this manner is fixedly arranged at a proper portion in a tire of a vehicle such as an automobile in a state that it is assembled to a transponder to be used. The transponder is provided with an antenna coil. A current induced in the antenna coil by an electromagnetic wave output from an antenna on the side of the vehicle activates the pressure sensor. Then, pressure information measured is output to the side of the vehicle as an electromagnetic wave. Since an air pressure in the tire is applied to a thin portion 10a of the pressure sensor 1 within the container 20 via an opening 23a formed in the upper lid 23, when the air pressure within the tire is a pressure exceeding a pressure within an airtight space S set to, for example, the atmospheric pressure as a reference pressure, the thin portion 10a is flexed and deformed.
The pressure sensor 1 is provided with a dielectric film 3 that is closely laminated on a face of a bottom plate (an insulating plate) 21 of the ceramic container 20 via a lower electrode film 2, a detecting piece 10 provided with the thin portion 10a and a thick portion 10b surrounding the thin portion 10a, and an upper electrode film 11 formed on the detecting piece 10 from a lower face of the thin portion 10a to the thick portion 10b. The pressure sensor 1 has a constitution in which a recessed portion 10A corresponding to the thin portion 10a is formed as the airtight space S by closely fixing the lower face of the thick portion of the detecting piece 10 on a face of the insulating member 21 via the upper electrode film 11.
A base plate is constituted of the bottom plate 21, the lower electrode film 2, and the dielectric film 3.
A characteristic constitution of the pressure sensor 1 of the present invention lies in that a piezoelectric material such as quartz is used for the detecting piece 10, and in particular lies in a point that the detecting piece 10 is made from a piezoelectric material plate having a thickness sliding oscillation mode or a thickness vertical mode, and for example an AT cut quartz plate.
In the embodiment, although a lower face of the detecting piece 10 corresponding to the thin portion 10a is formed as the recessed portion 10A in order to form the airtight space S, this constitution is just an example, as described later. That is, if an airtight space is formed by forming a fine gap (about 3µm) between the dielectric film 3 and the upper electrode film 11 on the lower face of the thin portion 10a, any constitution can be employed.

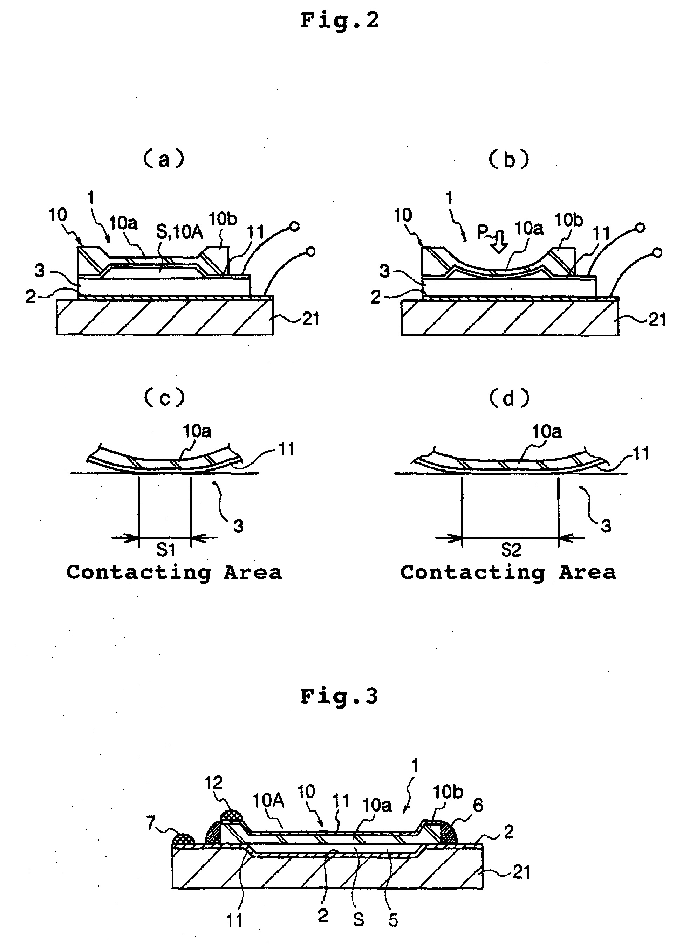

In the embodiment, a leading electrode 2a is formed to extend from the lower electrode film 2 provided on the upper face of the insulating plate 21 such as ceramics outside the container. A leading electrode 11a is formed to extend from the upper electrode 11 formed on the lower face of the detecting piece 10 outside the container. It is possible to detect a change of a capacitance value between the upper and the lower electrode films 11 and 2 disposed to be opposed to each other via the airtight space and the dielectric film 3 using the both leading electrodes 2a and 11a and calculate external pressure based on the detection result.
That is, a capacitance value C of a capacitor is expressed by the following equation.
C=ε·(S/d) (ε represents a dielectric constant of dielectric; S represents an area of an electrode; and d represents a distance between electrodes)
That is, when a distance d between the electrode films 2 and 11 is set to be small, the capacitance value C becomes large, but when the distance d between the electrodes 2 and 11 is set to be large, the capacitance C becomes small. On the other hand, when opposed areas of the two electrode films opposed to each other are made large, the capacitance value C becomes large. On the contrary, when the opposed areas of the two electrode films opposed to each other become small, the capacitance value C becomes small.
The touch-mode type pressure sensor 1 constituted in the above manner is disposed in the atmosphere in a state of being assembled in the container 20. The interior of the airtight space S is set to a pressure similar to the atmospheric pressure. When an external atmospheric pressure is the same as an atmospheric pressure inside the airtight space S, as shown in Fig. 2(a), since the atmospheric pressure inside the airtight space is balanced with the external pressure, the thin portion 10a serving as a diaphragm does not deform. On the other hand, when the external atmospheric pressure becomes higher than the atmospheric pressure inside the airtight space, as shown in Fig. 2(b), the thin portion 10a deforms to approach to the dielectric film 3. Figs. 2(c) and 2 (d) show a state that contacting areas S1 and S2 of the thin portion 10a and the dielectric film 3 change according to magnitude of an external pressure. When capacitance values C1 and C2 in a case of a contacting area S1 shown in Fig. 2(c) and in a case of a contacting area S2 shown in Fig. 2(d) (S1<S2) are compared with each other,
C1=ε·(S1/d) is obtained when the contacting area is S1, and C2=ε·(S2/d) is obtained when the contacting area is S2.
When the external pressure becomes larger than the pressure in the airtight space S (the atmospheric pressure), the thin portion 10a (diaphragm) deforms and the upper electrode film 11 comes in contact with the dielectric film 3. Accordingly, the pressure can be sensed by detecting the change of the contacting area of the upper electrode film 11 and the dielectric film 3 at this time as a capacitance value.
The pressure sensor 1 shown in Fig. 1 and Fig. 2 uses ceramics serving as the insulating plate as the bottom plate 21, but any other material such as glass or quartz other than ceramics can be used as the insulating plate. When a quartz material is used for the bottom plate 21, since thermal expansion coefficient thereof is coincident with that of the quartz material constituting the detecting piece 10, there is such an advantage that an adverse influence due to thermal strain can be avoided. The pressure sensor 1 having such a bottom plate 21 and such a diaphragm may be accommodated in a package made from ceramics or the like.
Electrically conductive materials such as metal can be used for the bottom plate 21 instead of the insulating material. In this case, the bottomplate 21 itself as the electrically conductive material can be utilized as the lower electrode without forming the lower electrode film 2 on the bottom plate.

Fig. 3 is a sectional view showing a modified embodiment of the pressure sensor according to the present invention. In the embodiment, a quartz plate with a thickness of about 0.25mm is used as the bottom plate 21. The detecting piece 10 made from quartz is closely fixed on an upper face of the bottom plate by using an adhesive 6 such as an epoxy adhesive to perform sealing so as to cover a recess 5 provided on an upper face of the quartz bottom plate 21. Accordingly, the interior of the recess 5 constitutes an airtight space S with a depth of about 3µm. A lower electrode film 2 made from Cu-Al or the like is formed on a face of the bottom plate 21 including an inner wall of the recess 5. An electrical terminal is formed by applying an electrically conductive adhesive 7 on one end portion of the lower electrode film 2. Another electrical terminal is formed by applying an electrically conductive adhesive 12 on a portion of the upper electrode film 11 positioned near its one end portion.
In the embodiment, the thin portion 10a of about 5µm is formed by forming the recessed portion 10A on only the upper face of the detecting piece 10 which is the quartz plate and forming the lower face thereof in the flat face. An outer periphery of the thin portion 10a is supported by the thick portion 10b. The upper electrode film 11 made from Cu-Al or the like is formed on the upper face of the detecting piece 10. The embodiment is characterized in that a dielectric film is not provided separately and the thin portion made from quartz is utilized as the diaphragm and also utilized as the dielectric film. That is, when the external atmospheric pressure exceeds the atmospheric pressure inside the airtight space S, the thin portion 10a flexes downwardly so that the flat lower face comes in contact with the lower electrode film 2. It is possible to sense an external pressure by detecting a change of the contacting area of the lower face of the thin portion and the lower electrode film 2 at this time as a capacitance value.
In the embodiment, the recess 5 is formed on the face of the bottom plate 21 and the lower face of the detecting piece 10 is formed flat. On the contrary, the face of the bottom plate 21 may be formed flat and the recessed portion may be formed on the lower face of the detecting piece 10 opposed thereto.
In the embodiment, the quartz plate constituting the thin portion is utilized as the dielectric without disposing a separate dielectric film. In addition, the pressure sensor may be constituted such that a separate dielectric film made from a dielectric material other than quartz is disposed on a portion of the lower electrode film 2 positioned in the recess 5 and the lower face of the thin portion and the dielectric film is normally put in a non-contacting state.

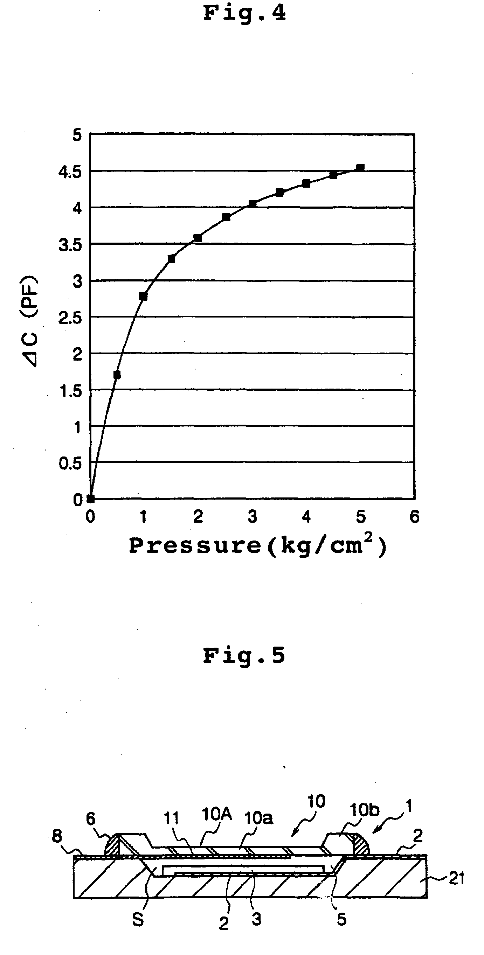

Fig. 4 is a graph showing characteristics of the touch-mode capacitance type pressure sensor according to the embodiment shown in Fig. 3. In Fig. 4, a vertical axis indicates a measured capacitance value (pF) and a horizontal axis indicates an external pressure corresponding to each capacitance value. As apparent from this Table, an external pressure can be measured with a high sensitivity according to the embodiment.

Next, Fig. 5 is a sectional view of a touch-mode capacitance type pressure sensor according to another embodiment of the invention. The pressure sensor 1 is provided with a bottom plate 21 with a thickness of about 0.25mm made from such insulating materials as ceramics, glass, or quartz, and a detecting piece 10 made from quartz whose upper face has a recess particle portion and whose lower face is flat. The pressure sensor has such a constitution that a detecting piece 10 is arranged so as to close the recess 5 (a depth of about 3µm) formed on the upper face of the bottom plate 21 and the recess 5 is sealed airtightly by the adhesive 6. The detecting piece 10 has a recessed portion on its upper face, and a bottom portion of the recessed portion constitutes the thin portion 10a. The upper electrode film 11 is formed on a bottom face of the thin portion 10a, and the upper electrode film 11 is electrically connected to another electrode film 8 (which is electrically isolated from the lower electrode film 2) provided on the bottom plate 21. The lower electrode film 2 is formed to extend from an upper face of the bottom plate 21 to an inner wall and an inner bottom face of the recess 5, and a dielectric film 3 (with a thickness of 2000 to 5000Å) such as SiO₂ is disposed on the lower electrode film on the recess inner bottom face to be in non-contact with a lower face of the detecting piece. Accordingly, the upper electrode 11 on the lower face of the detecting piece 10 and the dielectric film 3 within the airtight space S are opposed to each other via a predetermined gap. Further, the lower electrode film 2 is positioned below the dielectric film 3.
With the above constitution, when an external atmospheric pressure exceeds an atmospheric pressure in the airtight space S, it is possible to detect, as the capacitance value, a change of the contacting area of the upper electrode 11 and the dielectric film 3 occurring when the thin portion 10a flexes downwardly and the lower face of the upper electrode 11 comes in contact with the dielectric film 3, and to sense the external atmospheric pressure.

The constitutional feature common in the respective embodiments of the invention described above lies in that quartz is used as the material for the detecting piece 10 instead of silicon, and superiority of the present invention lies in the following point.
First, quartz is a physically stable material as compared with silicon, and has reduced secular change and high reproducibility due to mechanical deformation (hysteresis is reduced).
Next, with quartz, it is easy to strictly manage the thickness of the thin portion 10a serving as the diaphragm. That is, the thin portion 10a is first formed by etching to a quartz plate in order to work the thin portion to a target thickness. Thereafter, a natural frequency based on the thickness of the thin portion is measured by flowing current to the thin portion 10a and the measured frequency is compared with a target frequency (a target thickness). When the measured frequency is not coincident with the target frequency, fine etching is performed until the measured frequency reaches the target frequency. As a result, diaphragms with a uniform thickness where there is no thickness difference in the thin portion among the individuals of the diaphragms can be obtained.
Briefly, as a material used for a detecting piece in a touch-mode capacitance type pressure sensor requiring a considerably high dimensional precision, it can be said that the quartz is most suitable in view of easiness of thickness control on a thin portion and workability. In a working process for a thin portion in a detecting piece made from a semiconductor material such as silicon, a silicon plate boron-doped from its one surface layer is used. Then, a step of leaving the boron-doped layer as the thin portion by etching the silicon plate from a surface opposed from the boron-doped surface thereof to remove only the silicon portion is performed. However, since it is impossible to control a layer thickness of a boron-doped layer accurately at a boron doping time, fluctuation in filmthickness among boron-doped layers left after etching occurs. On the other hand, when the quartz plate is used, since a thickness of the thin portion can be controlled with a high precision by only etching without performing doping process, it can be said that the quartz plate is the material most suitable for the touch-mode type pressure sensor.
The technique for measuring a natural frequency of the thin portion 10a of such piezoelectric material as quartz in order to finely adjust the thickness thereof is well known as a working technique on a super thin plate piezoelectric oscillator obtained by the present applicant, as disclosed in Japanese Patent Application Laid-Open No. 06-021740, for example, and the technique can be applied to the measuring technique as it is.

Next, when the detecting piece 10 is constituted from a quartz material having a cut angle which allows controlling on a resonant frequency according to a plate thickness, it is possible to measure a thickness of the thin portion accurately based on the resonant frequency of the thin portion during working. That is, since a thickness of the thin portion is conventionally measured by an optical measuring method or a surveying method, an error is large, which results in fluctuation in characteristics among products. On the other hand, it is possible to control a thickness while confirming the thickness according to a frequency conversion by utilizing characteristics where the resonant frequency can be controlled according to the plate thickness,and therefore accuracy can be obtained.
For example, when the detecting piece 10 is made from a piezoelectric material plate having a thickness sliding oscillation mode and is made from a piezoelectric material plate having a thickness vertical mode, it is possible to measure a thickness of the thin portion accurately based on the resonant frequency of the thin portion. That is, by utilizing the thickness sliding characteristic or the thickness vertical mode characteristic, it is possible to frequency-convert the thickness, so that the accuracy can be obtained.
In particular, when working the thin portion is performed by such an etching process as wet-etching or dry-etching, it is possible to form the thin portion with a desired thin thickness by utilizing the measuring method that frequency-converts a thickness of the thin portion. That is, when a detecting piece is manufactured by using the piezoelectric material having the thickness sliding characteristic, it is preferable that a step of frequency-converting a thickness of the thin portion 10a to confirm the same is performed in order to realize improvement in yield due to improvement in working precision.

When the thin portion is constituted from a quartz material which has a cut angle which allows controlling on a resonant frequency according to a plate thickness, such as a piezoelectric material plate having a thickness sliding oscillation mode or a thickness vertical mode, any piezoelectric material can be applied for the thin portion, but an AT cut quartz plate can be exemplified as a typical example.
Further, by constituting the detecting piece 10 and the bottom plate 21 with the same kind of piezoelectric crystal material and joining the detecting piece to the bottom plate such that crystal axes of the detecting piece and the bottom plate coincide with each other, thermal expansion characteristics of the both can coincide with each other strictly and a performance of the pressure sensor can be stabilized than when simply the same material is used.
The pressure sensor of the present invention can be applied to not only the touch-mode type pressure sensor measuring a pressure based on a contacting area of a dielectric film on the bottom plate and the thin portion of a detecting piece but also a gap type pressure sensor (an electrostatic capacitance is controlled based on a distance between the diaphragm and the bottom plate) other than the touch-mode type pressure sensor. That is, when the detecting piece is made from a piezoelectric material having the thickness sliding mode, a thickness of the thin portion 10a can be set with a high accuracy. Therefore, it is possible to suppress fluctuation in electrical and mechanical characteristics among individuals by application to the touch-mode type pressure sensor. Furthermore, even when the detecting piece for a gap type pressure sensor is made from a piezoelectric material having the thickness sliding mode, fluctuation in electrical and mechanical characteristics among individuals can be suppressed.

In the above embodiment, an example that the thin portion 10a of the detecting piece is put in a non-contacting state with the dielectric film or the like during non-measurement by setting the airtight space S to the atmospheric pressure has been shown. On the other hand, an initial setting may be conducted such that the thin portion 10a of the detecting piece (the upper electrode film 11) is in contact with the dielectric film 3, the upper electrode film 2, or the face of the bottom plate 21 during non-measurement. That is, in this case, the thin portion 10a can be put in a contacting state with the dielectric film 3, the upper electrode film 2, or the bottom plate 21 during non-measurement in which the pressure sensor is disposed in the atmospheric pressure by setting the atmospheric pressure in the airtight space S to a pressure lower than the atmospheric pressure, for example, a vacuum state.
That is, when the airtight space S is held in the atmospheric pressure, expansion and contraction of gas in the space occur according to change of an ambient temperature. Therefore, since fluctuation in initial position of the thin portion 10a occurs, accurate measurement becomes difficult. When the airtight space S is set to a vacuum state (including a reduced pressure state lower than the atmospheric pressure), expansion and contraction of the airtight space S do not occur due to change of the ambient temperature. Accordingly, the diaphragm operates according to only change of a measured atmospheric pressure. Thus, particularly, in the touch-mode sensor, the thin portion 10a is always put in a state deformed toward the bottom plate due to an external atmospheric pressure, so that it maintains a contacting state with the dielectric film 3 or the upper face of the bottom plate 21 as an initial state. By setting the airtight space to vacuum in this manner, a margin allowing deviation of the thin portion 10a due to external temperature change is eliminated because a reference pressure value is an absolute zero pressure, so that sensitivity and precision are stabilized. Since pressure measurement starts from a touching state of the thin portion 10a to the bottom plate side, measurement can be performed with a good sensitivity excellent in linearity. That is, when the thin portion is separated from the bottom plate in the initial state, detection precision deteriorates before the thin portion touches the bottom plate side according to change of the external pressure, but when detection starts from a touching state of the thin portion to the bottom plate, such a drawback can be solved.

Explaining in more detail, as described above, the capacitance value C of the capacitor is expressed by the following equation.
C=ε·(S/d) (ε represents a dielectric constant of dielectric; S represents an area of an electrode; and d represents a distance between electrodes)
In the touch-mode type pressure sensor, for example, when a pressure equal to or more than the atmospheric pressure is measured, the airtight space S serving as a reference pressure chamber is set to a vacuum state. Thus, it is possible to make the thin portion of the detecting piece approach to or contact with the upper face of the bottom plate, and it is possible to obtain sensor sensitivity characteristics excellent in linearity from a low pressure state to a high pressure state. That is, when the distance d between the electrodes is relatively large, the pressure sensor detects the capacitance value C to the change of the distance d between the electrodes in the low pressure state. Thereafter, when the thin portion starts contacting with the face of the bottom plate due to advance to a high pressure state, the pressure sensor operates to detect the capacitance value C to a change amount of the area S (the contacting area) of the electrode.
In this case, since the change amount of the capacitance value C to the change of the distance d between the electrodes is smaller than the change amount of the capacitance value C to the change of the electrode area S (a capacitance value change to a unit pressure change), sometimes a capacitance change characteristic (a sensor sensitive characteristic) to a pressure change becomes non-linear. Accordingly, in order to achieve a sensor sensitivity characteristic excellent in linearity from a low pressure state to a high pressure state, it is necessary to flex the thin portion toward the bottom plate side by setting the airtight space S to a vacuum state so that the upper electrode film and the lower electrode film are always put in a state that they come in contact with each other or approach to each other.

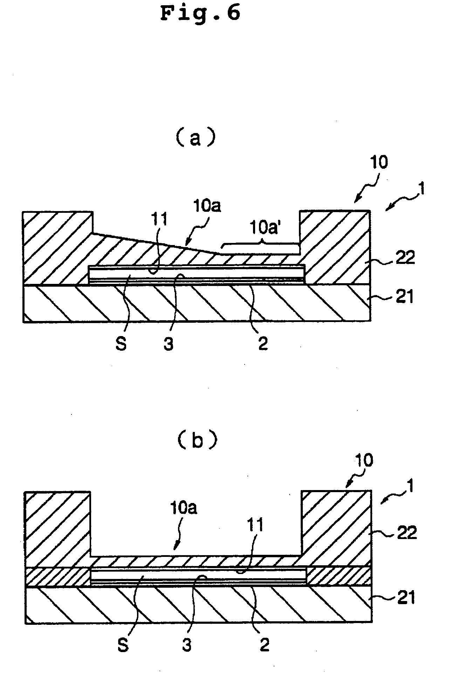

As a material for constituting the detecting piece 10, it is effective to use a quartz material provided with a hexagonal quartz structure having relatively high toughness. That is, since a quartz plate with a hexagonal quartz structure has excellent toughness, it is also used as an oscillator, and it is a material suitable for application to a touch-mode type pressure sensor where stress concentrates on a specific portion (the thin portion) of the detecting piece.
When the detecting piece is constituted of quartz which is a transparent body, it is possible to measure a thickness of the thin portion optically with a high precision.
On the other hand, for example, when the detecting piece 10 having the thin portion 10a is manufactured by working an AT cut quartz plate with anisotropy by wet-etching, as shown in Fig. 6(a), a thickness difference occurs in the thickness of the thin portion 10a. Since the thickness difference in the thin portion 10a is converted to an average value of the thickness of the thin portion, the thickness difference becomes larger than the thinnest portion 10a' of the thin portion. Accordingly, even if it is necessary to process the thin portion 10 as thin as possible, it is impossible to perform processing to a limit value of the etching process.
On the other hand, when a Z-axis quartz plate (a normal line to a main face of the quartz plate is coincident with a direction of a quartz crystal axis Z) is wet-etched, fluctuation in etching speed due to anisotropic etching on an etching face hardly occurs. Therefore, as shown in Fig. 6(b), since it is possible to thin the thickness of the thin portion 10a uniformly and to a limit value of etching process while maintaining a mechanical strength of the thin portion, the Z-axis quartz plate is effective, particularly, for application to a touch-mode type pressure sensor.
The Z-axis quartz plate does not have such an oscillation characteristic that a thickness can be converted to a frequency. Accordingly, as a method for confirming the thickness, an optical survey can be applied utilizing such a feature that the quartz plate is transparent.
The present invention has been explained using the recessed diaphragm, but the invention is not limited to the recessed diaphragm, and a diaphragm with a flat plate shape may also be used.
The pressure sensor of the present invention can be applied to a pressure measurement for fluids in addition to measuring a pressure change of gas in a closed space such as a tire.

### Brief Description of the Drawings

[Fig. 1]
   Figs. 1(a) and 1(b) are vertical sectional views showing an entire constitution of a touch-mode capacitance type pressure sensor according to an embodiment of the present invention, and a sectional view of the touch-mode capacitance type pressure sensor taken along line A-A.
[Fig. 2]
   Figs. 2(a) to 2(d) are explanatory views for an operation of the pressure sensor shown in Fig. 1.
[Fig. 3]
   Fig. 3 is a sectional view showing a constitution of a pressure sensor according to another embodiment of the present invention.
[Fig. 4]
   Fig. 4 is a graph showing a characteristic of the pressure sensor shown in Fig. 3.
[Fig. 5]
   Fig. 5 is a sectional view showing a constitution of a pressure sensor according to another embodiment of the present invention.
[Fig. 6]
   Fig. 6(a) is a sectional view of a detecting piece made from a quartz material having anisotropy, and Fig. 6(b) is a sectional view of a detecting piece according to the embodiment of the present invention.
[Fig. 7]
   Fig. 7 is an explanatory view of a conventional example.

### Description of Reference Numerals

- 1: Touch-mode capacitance type pressure sensor (pressure sensor)
- 2: Lower electrode film
- 3: Dielectric film
- 5: Recess
- 6: Adhesive
- 10: Detecting piece
- 10a: Thin portion
- 10b: Thick portion
- 10A: Recessed portion
- 11: Upper electrode film
- 20: Container
- 21: Bottom plate
- 22: Side wall
- 23: Upper lid

## Claims

1. A quartz pressure sensor, comprising a bottom plate made from an insulating material, a lower electrode film and a dielectric film sequentially laminated on a face of said bottom plate, a detecting piece provided at a position thereof opposed to said dielectric film with a thin portion and fixed on the face of said bottom plate, and an upper electrode film formed in at least one portion of said thin portion having a positional relationship thereof opposed to said lower electrode film, in which a fine gap space is provided between said upper electrode film and said dielectric film, **characterized in that** said detecting piece is made from a quartz material.

2. A quartz pressure sensor, comprising a bottom plate made from an insulating material, a lower electrode film laminated on a face of said bottom plate, a detecting piece provided at a position thereof opposed to said lower electrode film with a thin portion and fixed on the face of said bottom plate, and an upper electrode film formed in at least one portion of said thin portion having a positional relationship thereof opposed to said lower electrode film, in which a fine gap space is provided between said upper electrode film and said lower electrode film, **characterized in that** said detecting piece is made from a quartz material.

3. The quartz pressure sensor according to claim 1 or 2,
**characterized in that** said airtight space is formed at least by a recessed portion formed on one portion of a lower face of said detecting piece or a recess formed on a face of said bottom plate.

4. A quartz pressure sensor, comprising a lower electrode film and a dielectric film sequentially laminated on a face of a bottom plate made from an insulating material, a detecting piece constituted of a thin portion and a thick portion surrounding said thin portion, and an upper electrode film formed in at least one portion of a lower face of the thin portion in said detecting piece, in which an airtight space defined by a fine gap is formed between the thin portion and the bottom plate by fixing a lower face of the thick portion in said detecting piece to the face of the bottom plate in a close contact manner, **characterized in that** said detecting piece is made from a quartz material.

5. The quartz pressure sensor according to any one of claims 1 to 4, **characterized in that** said bottom plate is made from a quartz material.

6. A quartz pressure sensor, comprising a dielectric film also serving as a lower electrode film and laminated on a face of a bottom plate made from a conductive material, a detecting piece constituted of a thin portion and a thick portion surrounding said thin portion, and an upper electrode film formed in at least one portion of a lower face or an upper face of the thin portion in said detecting piece, in which an airtight space defined by a fine gap is formed between the thin portion and the bottom plate by fixing a lower face of the thick portion in said detecting piece to the face of said bottom plate in a close contact manner,
**characterized in that** said detecting piece is made from a quartz material.

7. Aquartz pressure sensor, **characterized in that** the detecting piece according to any one of claims 1 to 6 is disposed such that a main face of the thin portion on its flat face side is opposed to the face of the bottom plate.

8. The quartz pressure sensor according to any one of claims 1 to 7, **characterized in that** said detecting piece is formed with the thin portion by performing a thinning work on a quartz plate with etching.

9. The quartz pressure sensor according to any one of claims 1 to 8, **characterized in that** said detecting piece and said bottom plate are made from quartz materials of the same kind, and the detecting piece is joined to the bottom plate such that crystal axes of the detecting piece and the bottom plate coincide with each other.

10. The quartz pressure sensor according to any one of claims 1 to 9, **characterized in that** said quartz pressure sensor is of a touch-mode type.

11. The quartz pressure sensor according to any one of claims 1 to 10, **characterized in that** the thin portion in said detecting piece or the upper electrode film is in contact with said dielectric film or the face of the bottom plate during non-measurement.

12. The quartz pressure sensor according to claim 11,
**characterized in that** said airtight space is in a vacuum state.

13. The quartz pressure sensor according to any one of claims 1 to 12, **characterized in that** said detecting piece is made from a quartz material having a cut angle which can control a resonant frequency by plate thickness adjustment.

14. A quartz pressure sensor, **characterized in that** the quartz material according to claim 13 is made from a quartz material having a thickness sliding oscillation mode or a thickness vertical mode.

15. The quartz pressure sensor according to any one of claims 1 to 14, **characterized in that** said detecting piece is constituted of an AT cut quartz plate.

16. A manufacturing method of the quartz pressure sensor according to any one of claims 13 to 15, **characterized by** comprising a step of frequency-converting the thickness of said thin portion to confirm the same.

17. The quartz pressure sensor according to any one of claims 10 to 12, **characterized in that** said quartz pressure sensor is a touch-mode type pressure sensor where a quartz plate with a cut angle where a normal line to a face of the quartz plate is approximately coincident with a quartz crystal Z-axis direction is used as the quartz plate constituting the detecting piece.

## Amended claims

### Amended claims under Art. 19.1 PCT

**1.** Amended) Aquartz pressure sensor, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is made from a quartz material having a cut angle that allows measurement of a natural frequency based on a thickness of said thin portion when a current is caused to flow in said thin portion.

**2.** Amended) Aquartzpressuresensor, comprisingabottomplate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is made from a quartz material having a thickness sliding oscillation mode or a thickness vertical mode that allows measurement of a natural frequency based on a thickness of said thin portion when a current is caused to flow in said thin portion.

**3.** Amended) A quartz pressure sensor, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is constituted of an AT cut quartz plate that allows measurement of a natural frequency based on a thickness of said thin portion when a current is caused to flow in said thin portion.

**4.** Amended) A quartz pressure sensor of a touch-mode type, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is made from a quartz material having a cut angle that allows measurement of a natural frequency based on a thickness of said thin portion when a current is caused to flow in said thin portion.

**5.** Amended) A quartz pressure sensor of a touch-mode type, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is made from a quartz material having a thickness sliding oscillation mode or a thickness vertical mode that allows measurement of a natural frequency based on a thickness of said thin portion when a current is caused to flow in said thin portion.

**6.** Amended) A quartz pressure sensor of a touch-mode type, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is made of an AT cut quartz plate that allows measurement of a natural frequency based on a thickness of said thin portion when a current is caused to flow in said thin portion.

**7.** Amended) A quartz pressure sensor, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is of a touch-mode type made from a quartz material having a cut angle that allows measurement of a natural frequency based on a thickness of said thin portion when a current is caused to flow in said thin portion, and the thin Portion of said detecting piece or the upper electrode film is in a contactinct state with said dielectric film or the face of said bottom plate during non-measurement.

**8.** Amended) A quartz pressure sensor, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is of a touch-mode type made from a quartz material having a thickness sliding oscillation mode or a thickness vertical mode that allows measurement of a natural frequency based on a thickness of said thin portion when a current is caused to flow in said thin portion, and the thin portion of said detecting piece or the upper electrode film is in a contacting state with said dielectric film or the face of said bottom plate during non-measurement.

**9.** Amended) A quartz pressure sensor, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is of a touch-mode type constituted of an AT cut quartz plate that allows measurement of a natural frequency based on a thickness of said thin portion when a current is caused to flow in said thin portion, and the thin portion of said detecting piece or the upper electrode film is in a contacting state with said dielectric film or the face of said bottom plate during non-measurement.

**10.** Amended) A quartz pressure sensor of a touch-mode type, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece is constituted of a quartz plate having a cut angle where a normal line to a face of the quartz plate is approximately coincident with a direction of a crystal axis of quartz.

**11.** Amended) A quartz pressure sensor, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** said detecting piece, as a quartz plate, is of a touch-mode type that is constituted of a quartz plate having a cut angle where a normal line to a face of the quartz plate is approximately coincident with a direction of a crystal axis of quartz, and the thin portion of said detecting piece or the upper electrode film is in a contacting state with said dielectric film or the face of said bottom plate during non-measurement.

**12.** Amended) The quartz pressure sensor according to claims 1 to 11, **characterized in that** said detecting piece comprises said thin portion and a thick portion surrounding said thin portion, and at least said thick portion is fixed on a face of said bottom face.

**13.** Added) The quartz pressure sensor according to claims 1 to 11, **characterized in that** said detecting piece comprises said thin portion and a thick portion surrounding said thin portion, said bottom plate is made from a quartz material, has a recessed portion obtained by forming one portion of the quartz material in a thin portion, and has said lower electrode film and said dielectric film sequentially laminated on a bottom face of said recessed portion, and thick portion of said detecting piece is fixed on an upper face of a thick portion of said bottom plate such that the thin portion of said detecting piece is positioned on an upper face of the recessed portion of said bottom plate.

**14.** Amended) The quartz pressure sensor according to claims 1 to 11, **characterized in that** said detecting piece and said bottom plate are made from quartz materials of the same kind, and said detecting piece is fixed on said bottom plate such that crystal axes of said detecting piece and said bottom plate coincide with each other.

**15.** Amended) The quartz pressure sensor according to claims 1 to 10, **characterized in that** said thin portion is one obtained by forming a quartz plate to be thin by an etching process.

**16.** Amended) The quartz pressure sensor according to claims 1 to 11, **characterized in that** said detecting piece comprises said thin portion and a thick portion surrounding said thin portion, and said thin portion is obtained by forming a quartz plate to be thin by an etching process.

**17.** Amended) The quartz pressure sensor according to claims 1 to 11, comprising a bottom plate, a lower electrode film and a dielectric film sequentially laminated on an upper face of said bottom plate, a detecting piece provided at a position thereof opposed to said dielectric film with a thin portion and fixed on the upper face of said bottom plate, and an upper electrode film formed in at least one portion of said thin portion having a positional relationship thereof opposed to said lower electrode film, **characterized in that** a vacuum space is provided between said upper electrode film and said dielectric film.

**18.** Amended) A manufacturing method of the quartz pressure sensor according to claims 1 to 9, **characterized in that** a step of processing a thickness of a quartz plate to form said thin portion includes a step of frequency-converting the thickness of said thin portion to confirm the same.
